# EUROPÄISCHE PATENTSCHRIFT

(11) **EP 3 926 295 B1**
(45) Veröffentlichungstag und Bekanntmachung des Hinweises auf die Patenterteilung: **31.07.2024**
(21) Anmeldenummer: 20180153.7
(22) Anmeldetag: 16.06.2020
(51) Int. Cl.: G01B 11/04, G01B 11/25

(54) **VERFAHREN ZUM ERKENNEN EINER VERZERRUNG EINES EIN CODEWORT DEFINIERENDEN LICHTMUSTERS SOWIE LICHTMUSTER**
LIGHT PATTERN AND METHOD FOR DETECTING DISTORTION OF A LIGHT PATTERN DEFINING A CODE WORD
PROCÉDÉ DE DÉTECTION D'UNE DISTORSION D'UN MOTIF LUMINEUX DÉFINISSANT UN MOT DE CODE AINSI QUE MOTIF LUMINEUX

(43) Veröffentlichungstag der Anmeldung: 22.12.2021
(73) Patentinhaber: VITRONIC Dr.-Ing. Stein Bildverarbeitungssysteme GmbH, 65189 Wiesbaden (DE)
(72) Erfinder: OTT, Konstantin, 65197 Wiesbaden (DE); ZIMPRICH, Martin, 65189 Wiesbaden (DE); RICHTER, Martin, 60326 Frankfurt (DE)
(74) Vertreter: Neumann Müller Oberwalleney Patentanwälte PartG mbB

(56) Entgegenhaltungen:
- EP-A1- 2 728 305
- EP-A2- 2 372 648
- WO-A1-2013/076605
- US-A1- 2015 304 617

## Beschreibung

Die Erfindung betrifft ein Verfahren zum Erkennen einer Verzerrung eines ein Codewort definierenden Lichtmusters. Hierbei wird ein Lichtmuster mittels einer Lichtquelle zum Beispiel auf ein Objekt projiziert, wobei das auf eine Referenzebene bezogene Lichtmuster ein Referenzlichtmuster darstellt. Das Referenzlichtmuster weist einzelne, beabstandet zueinander angeordnete Lichtmusterelemente auf, die in Richtung einer ersten Erstreckungsachse in mehreren aufeinanderfolgenden Spalten angeordnet sind. Die Spalten erstrecken sich jeweils in Richtung einer zweiten Erstreckungsrichtung quer zur ersten Erstreckungsachse und beinhalten jeweils mindestens eines der Lichtmusterelemente. Die Anzahl und/oder Position des mindestens einen Lichtmusterelements in jeder Spalte des Referenzlichtmusters ist ein Codiermerkmal, wobei eine Abfolge von Lichtmusterelementen in einer vorbestimmten Anzahl aufeinanderfolgender Spalten ein Codewort definieren. Das Lichtmuster wird mittels eines optischen Sensors (Bildsensors) erfasst.

Ferner betrifft die Erfindung ein Lichtmuster zur Verwendung bei einem Verfahren zum Erkennen einer Verzerrung eines ein Codewort definierenden Lichtmusters, wobei das Lichtmuster einzelne, beabstandet zueinander angeordnete Lichtmusterelemente aufweist, die in Richtung einer ersten Erstreckungsachse in mehreren aufeinanderfolgenden Spalten angeordnet sind. Die Spalten erstrecken sich jeweils in Richtung einer zweiten Erstreckungsachse quer zur ersten Erstreckungsachse und beinhalten jeweils mindestens eines der Lichtmusterelemente. Die Anzahl und/oder Position des mindestens einen Lichtmusterelements in jeder Spalte des Lichtmusters ist ein Codiermerkmal, wobei eine Abfolge von Lichtmusterelementen in einer vorbestimmten Anzahl aufeinanderfolgender Spalten definieren.

Ein solches Verfahren und ein solches Lichtmuster sind aus der EP 2 728 305 A1 bekannt. Das dort offenbarte Verfahren dient zum Messen der Höhe oder des Höhenverlaufs eines Objekts, wobei Lichtmusterelementgruppen aus einer Abfolge einer vorbestimmten Anzahl von aufeinanderfolgenden Lichtmusterelementen jeweils individuelle genau einmal innerhalb des Codeworts existierende Teilcodewörter definieren, wobei unmittelbar benachbarte Lichtmusterelementgruppen teilweise dieselben Lichtmusterelemente umfassen und wobei jede Lichtmusterelementgruppe einer bestimmten Referenzposition in Richtung der Erstreckungsachse bezogen auf eine Referenzebene zugeordnet ist. Die Höhe des Objekts wird anhand der ermittelten Position der Lichtmusterelementgruppen im Vergleich zur jeweiligen Referenzposition bestimmt. Die Lichtmusterelemente sind hierbei einzelne Lichtpunkte, wobei das Codiermerkmal die Position der Lichtpunkte in Richtung quer zur Erstreckungsachse des Lichtmusters in Richtung der Abfolge der einzelnen Lichtpunkte ist, wobei die Lichtpunkte in mehreren Zeilen entlang der Erstreckungsachse des Lichtmusters angeordnet sind.

Jede Lichtmusterelementgruppe ist einer bestimmten Referenzposition zugeordnet. Wenn das Verfahren zur Bestimmung der Dimensionen von Paketen auf einem Förderband eingesetzt wird, bestimmt die Referenzposition die Position der jeweiligen Lichtmusterelementgruppe auf dem Förderband quer zur Transportrichtung. Wird nun ein Paket durch das Lichtmuster hindurch befördert, werden die Lichtmusterelementgruppen, welche von der Paketoberfläche reflektiert werden, in der vom optischen Sensor erfassten Abbildung quer zur Transportrichtung verschoben, wobei anhand des Ausmaßes der Verschiebung auf die Höhe des Pakets geschlossen werden kann, da die Referenzposition bekannt ist. Das Förderband bildet hierbei eine Referenzebene, auf die sich die räumliche Referenzposition bezieht.

Zu einem Problem kann es dann kommen, wenn das Objekt auf dem Förderband relativ zur Lichtquelle mit einer gekippten Oberfläche befördert wird. Die Oberfläche des Objekts kann entweder zur Seite oder nach vorne/hinten gekippt sein. Bei einem Rollwinkel, wenn die Oberfläche des Objekts in Transportrichtung betrachtet zur Seite gekippt ist, können sich die Abstände der Lichtmusterelemente des projizierten Lichtmusters in Richtung der Erstreckungsachse verändern, so dass die Lichtmusterelemente im schlechtesten Fall miteinander verschwimmen. Bei einem Nickwinkel, wenn die Oberfläche des Objekts in Transportrichtung betrachtet nach vorn oder hinten gekippt ist, kann das projizierte Lichtmuster in Richtung der Erstreckungsachse geschert werden. Hierbei besteht die Gefahr, dass das Codewort seine Eindeutigkeit verliert und nicht mehr korrekt dekodiert werden kann.

Aus der WO 2004/083778 A1 sind ein Verfahren und ein Lichtmuster zum Scannen eines Oberflächenprofil eines Objekts bekannt.

WO 2013/076605 A1 offenbart ein Verfahren zum Projizieren eines Diabildes, wobei eine Verzerrung des Diabildes durch einen Projektor ausgeglichen wird. Hierzu wird ein Satz von Verzerrungsvektoren für den Projektor ermittelt, wobei jeder Verzerrungsvektor eine Verzerrung aus vorhergesagten Koordinaten darstellt, die durch diesen Projektor verursacht wird. Zur verzerrungsfreien Projizierung eine Diabildes werden für jede Pixelkoordinate des Diabildes die entsprechenden Verzerrungsvektoren abgerufen, und die Verzerrung in dem projizierten Diabild dadurch ausgeglichen, dass die Pixel des zu projizierenden Diabildes unter Verwendung dieses aktuellen Verzerrungsvektors verschoben werden.

US 2015/0304617 A1 beschreibt ein System und Verfahren zur Durchführung einer Verzerrungskorrektur und Kalibrierung unter Verwendung eines von einem Projektor projizierten Musters. Das System zur Durchführung von Verzerrungskorrektur und Kalibrierung umfasst einen Projektor, der ein Muster projiziert, mindestens eine Kamera, die ein fotografiertes Musterbild erzeugt, indem sie ein Bild fotografiert, auf das das Muster projiziert wird, und eine Bildverarbeitungsvorrichtung, die einen Kalibrierungsparameter berechnet, indem sie ein ursprüngliches, vom Projektor projiziertes Musterbild und das fotografierte Musterbild vergleicht. Es wird ein genaues Tiefenbild erzeugt, indem ein Bild für das vom Projektor projizierte Muster verwendet wird. Darüber hinaus kann bei der Gewinnung des Tiefenbildes der Kalibrierungsparameter zur Korrektur der Bildverzerrung des Kameraobjektivs unter Verwendung des vom Projektor projizierten Musters effizient ermittelt werden.

Aufgabe der vorliegenden Erfindung ist es, ein Verfahren und ein Lichtmuster bereitzustellen, die ein Erkennen einer Verzerrung eines, mindestens ein Codewort definierenden, Lichtmusters ermöglicht.

Das Dokument EP2728305 A1 offenbart ein Verfahren zum Messen der Höhe eines Objekts wobei ein Codewort definierenden Lichtmuster verwendet wird gemäß dem Stand der Technik.

Gelöst wird die Aufgabe durch ein Verfahren mit den Merkmalen des Anspruch 1.

Ferner wird die Aufgabe durch ein Lichtmuster mit den Merkmalen des Anspruchs 13 gelöst.

Das Verfahren kann zum Beispiel bei der Bestimmung von Dimensionen von Objekten, wie beispielsweise Paketen, in einer Paketförderanlage eingesetzt werden. Hierbei können die Pakete auf einem Förderband oder auf mehreren hintereinander angeordneten Förderrollen in einer Transportrichtung bewegt werden. In einer solchen Anlage würde das Förderband bzw. die Förderrollen die Referenzebene definieren. Die erste Erstreckungsachse des Lichtmusters ist quer zur Transportrichtung angeordnet. Das Referenzlichtmuster ist das Lichtmuster, das bei einer Projektion des Lichtmusters auf die Referenzebene projiziert wird, wobei die Referenzebene senkrecht zur Blickrichtung (Sensorachse) des optischen Sensors angeordnet ist. Im Falle eines Förderbandes kann dies die Ebene des Förderbandes sein, auf die das Lichtmuster projiziert wird, sofern das Förderband senkrecht zur Sensorachse angeordnet ist.

Das auf das Förderband, die Förderrollen oder andere Elemente der Anlage sowie auf das Objekt projizierte Lichtmuster wird von dem optischen Sensor erfasst und als Abbild des erfassten Lichtmusters aufgenommen, so dass es in einer Verarbeitungsanlage, wie zum Beispiel einem Computer, analysiert und weiterverarbeitet werden kann. Ebenso kann das auf die Referenzebene projizierte Referenzlichtmuster als Abbild erfasst werden.

Durch die Detektion der geometrischen Muster im erfassten Lichtmuster kann die Form und Position des Lichtmusters, bzw. desjenigen Teils des Lichtmusters, das ein geometrisches Muster definiert, bestimmt werden. Zum Beispiel lässt sich anhand der erfassten geometrischen Muster erkennen, ob eine Verzerrung des Lichtmusters aufgetreten ist. Eine Verzerrung kann zum Beispiel dadurch geschehen, dass das Lichtmuster auf eine gegenüber der Referenzebene geneigte Oberfläche trifft bzw. auf diese projiziert wird.

In einem konkreten Ausführungsbeispiel kann ein Objekt (Paket) auf einem Förderband einer Paketförderanlage relativ zur Lichtquelle oder dem optischen Sensor bzw. relativ zur Referenzebene eine gekippte Oberfläche aufweisen, auf die das Lichtmuster projiziert wird. Die gekippte Oberfläche kann in Transportrichtung zur Seite und/oder nach vorne/hinten gekippt sein. Bei einem Rollwinkel, also wenn die Oberfläche zur Seite gekippt ist, und/oder bei einem Neigungswinkel, also wenn die Oberfläche nach vorn oder hinten gekippt ist, können sich die Abstände der einzelnen Lichtmusterelemente im erfassten Lichtmuster relativ zum Referenzlichtmuster zueinander ändern, so dass sich unter Umständen ihre Reihenfolge ändert oder sie ineinander übergehen bzw. miteinander verschwimmen. Es kann auch vorkommen, dass die einzelnen Lichtmusterelemente im erfassten Lichtmuster verzerren. Beide Verzerrungen des Lichtmusters können dazu führen, dass das Codewort nicht mehr korrekt dekodiert werden kann.

Zwei unmittelbar nebeneinander angeordnete geometrische Muster der Mehrzahl von geometrischen Mustern können ein oder mehrere gemeinsame Lichtmusterelemente aufweisen.

In einer Ausgestaltung des Verfahrens kann auch eine Mehrzahl von Lichtmustern in Richtung der zweiten Erstreckungsachse aufeinanderfolgend angeordnet sein. Die mehreren Lichtmuster bilden somit eine Art Lichtmusterfeld.

Wenn es sich bei den geometrischen Mustern zum Beispiel jeweils um ein Dreieck handelt, kann zur Ermittlung einer Verzerrung die Abstände der die geometrischen Muster definierenden Lichtmusterelemente des erfassten Lichtmusters zueinander mit den Abständen im Referenzlichtmuster verglichen werden.

Wenn eine Verzerrung vorliegt bzw. erkannt wurde, kann gemäß einem Ausführungsbeispiel des Verfahrens ein Abbild des erfassten Lichtmusters entzerrt werden, indem das Abbild des erfassten Lichtmusters derart umgewandelt wird, dass die geometrischen Muster im erfassten Lichtmuster den geometrischen Mustern im Referenzlichtmuster entsprechen.

Ein Entzerren des Abbilds des erfassten Lichtmusters kann erfolgen, indem die Abstände der die geometrischen Muster definierenden Lichtmusterelemente im erfassten Lichtmuster zueinander an die Abstände im Referenzlichtmusters bestmöglich angeglichen werden, wobei die auf die Lichtmusterelemente der geometrischen Muster angewandte Korrektur (Scher-Operation) auf alle übrigen Lichtmusterelemente angewendet wird.

In dem Abbild des Lichtmusters werden die, die geometrischen Muster definierenden Lichtmusterelemente, insbesondere die Stützstellen bzw. Eckpunkte der geometrischen Muster detektiert. Falls bestimmte, die geometrischen Muster definierende Lichtmusterelemente fehlen, zum Beispiel wenn die Lichtmusterelemente stark verzerrt wurden, können einige Lichtmusterelemente auch interpoliert werden. In diesem Fall reicht die Information zweier Lichtmusterelemente als Stützstellen aus, um eine dritte Stützstelle des jeweiligen geometrischen Musters interpolieren zu können, ggf. sofern genügend andere Lichtmusterelemente aus dem Lichtmuster, die um das jeweilige geometrische Muster liegen, vorhanden sind.

Weiterhin können die hier beschriebenen geometrischen Muster einem Neuronalen Netz als fixierte Ankerpunkte in der Bildverarbeitung dienen, womit das hier beschriebene Verfahren alternativ mittels Neuronalem Netz durchgeführt werden kann.

Im Anschluss an die Entzerrung kann das erfasste Lichtmuster dekodiert werden.

Bei den geometrischen Mustern kann es sich zum Beispiel jeweils um einen beliebigen Polygonzug handeln, der durch zumindest drei der Lichtmusterelemente definiert wird, wie etwa ein Vieleck, insbesondere ein Dreieck.

Zumindest eine Teilanzahl der Lichtmusterelemente kann hierbei Stützstellen eines geometrischen Musters bilden, also die Eckpunkte des Polygonzugs darstellen. Im Falle eines Dreiecks können zum Beispiel drei Lichtmusterelemente jeweils auf einer der Ecken des Dreiecks angeordnet sein. Das geometrische Muster ist demnach in Form eines Dreiecks gestaltet, wobei die Ecken des Dreiecks durch jeweils eines der Lichtmusterelemente definiert werden. Die Stützstellen können aber auch zwischen zwei Ecken des Polygonzugs angeordnet sein, um zum Beispiel eine gerade Strecke zu definieren.

In einem Ausführungsbeispiel des Verfahrens kann dieses genutzt werden, um die Dimensionen von Objekten zu ermitteln. Hierbei kann das Lichtmuster (bzw. jeweils die Lichtmuster, wenn ein Lichtmusterfeld gebildet wird) mehrere Abfolgen einer vorbestimmten Anzahl von Lichtmusterelementen in aufeinanderfolgenden Spalten aufweisen, die jeweils ein Codewort definieren, wobei die Lichtmusterelemente aller aufeinanderfolgender Spalten gemeinsam ein Gesamtcodewort definieren.

Die von den Lichtmusterelementgruppen definierten Codewörter können hierbei jeweils individuell genau einmal innerhalb des Gesamtcodeworts existieren. Somit lassen sich bei einem unvollständig erfassten bzw. abgebildeten Lichtmuster einzelne Codewörter dekodieren, deren Position in der ersten Erstreckungsachse eindeutig definiert ist, da jedes Codewort nur einmal innerhalb des Gesamtcodeworts existiert. Jede Lichtmusterelementgruppe ist somit einer bestimmten Referenzposition in Richtung der ersten Erstreckungsachse des Referenzlichtmusters zugeordnet.

Unmittelbar benachbarte Lichtmusterelementgruppen können teilweise dieselben Lichtmusterelemente umfassen. Die Codewörter überlappen demnach und sind nicht sequentiell hintereinander angeordnet. Eine Lichtmusterelementgruppe kann z.B. aus fünf Lichtmusterelementen bestehen, die unmittelbar nebeneinander angeordnet sind. Diese Lichtmusterelemente können beispielsweise die Lichtmusterelemente an der ersten bis fünften Position des Lichtmusters umfassen. Die unmittelbar benachbarte Lichtmusterelementgruppe umfasst dann zum Beispiel die fünf Lichtmusterelemente an den Positionen zwei bis sechs. Dies bedeutet, dass bei diesem Beispiel zur Erfassung eines Codeworts immer nur die Anzahl der Lichtmusterelemente, die ein Codewort definieren, gelesen werden müssen, da an jeder beliebigen Stelle des Lichtmusters fünf beliebige Lichtmusterelemente gelesen werden können, die dann ein Codewort ergeben.

Das Codiermerkmal der Lichtmusterelemente kann unterschiedlich sein. Zum Beispiel kann es sich hierbei um die Position des Lichtmusterelements quer zur ersten Erstreckungsachse des Lichtmusters handeln, im Fall einer Paketvolumenbestimmung wäre dies die Position des Lichtmusterelements in Transportrichtung. Die Lichtmusterelemente können demnach bezogen auf eine Achse quer zur Transportrichtung in unterschiedlichen Positionen in Transportrichtung ausgerichtet sein. Bei den Lichtmusterelementen selber kann es sich zum Beispiel um Punkte handeln. Das Codiermerkmal kann jedoch auch die Länge des Lichtmusterelements in Richtung quer zur ersten Erstreckungsachse des Lichtmusters und/oder die Anzahl der Lichtmusterelemente innerhalb einer Spalte sein.

Vorzugsweise handelt es sich bei den Lichtmusterelementen um beabstandet zueinander angeordnete Lichtpunkte, die also keine Überlappungen aufweisen und die alle dieselbe Größe und Form aufweisen.

Die Erfindung wird im Folgenden anhand der Zeichnungen näher erläutert. Hierin zeigt:
- Figur 1: eine perspektivische Darstellung einer Vorrichtung zur Durchführung eines Verfahrens zum Dekodieren eines durch ein Lichtmuster definierten Gesamtcodeworts,
- Figur 2a: ein Abbild eines verzerrten Lichtmusters,
- Figur 2b: ein Abbild des verzerrten Lichtmusters gemäß Figur 2a mit hervorgehobenem geometrischen Muster,
- Figur 2c: ein Abbild eines Referenzlichtmusters,
- Figur 2d: ein Abbild des Referenzlichtmusters gemäß Figur 2c mit hervorgehobenem geometrischen Muster,
- Figur 3: eine schematische Darstellung einer weiteren Ausführungsform einer Vorrichtung in Transportrichtung, und
- Figur 4: einen Ausschnitt eines Lichtmusters.

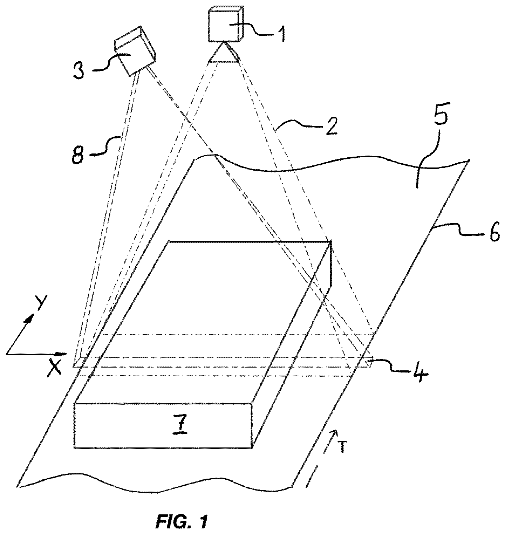

Figur 1 zeigt ein Beispiel einer Vorrichtung zum Dekodieren eines durch ein Lichtmuster definierten Gesamtcodeworts, insbesondere zum Messen der Höhe und des Höhenverlaufs eines Objekts.

Die Vorrichtung umfasst einen optischen Sensor 1 in Form eines Bildsensors einer Kamera. Der optische Sensor 1 weist einen Sichtbereich 2 auf, der in der vorliegenden Darstellung perspektivisch zu erkennen ist. Der Sichtbereich 2 des optischen Sensors 1 ist durch strichpunktierte Linien angedeutet. Hierbei ist zu erkennen, dass der Sichtbereich 2 des optischen Sensors 1 sich in Richtung einer ersten Erstreckungsachse X auffächert und in geringerem Maße in Transportrichtung T quer zur ersten Erstreckungsachse X. Die Vorrichtung umfasst ferner eine Lichtquelle 3 in Form eines Lasers, der ein Lichtmuster 4 in Richtung einer Referenzebene 5 projiziert. Die Referenzebene 5 wird durch die Oberfläche eines Förderbandes 6 definiert. Das Förderband 6 ist in Transportrichtung T angetrieben. Auf dem Förderband 6 liegt ein Objekt 7 in Form eines Pakets, dass von dem Förderband 6 in Transportrichtung T bewegt wird. Im vorliegenden Fall hat das Objekt 7 eine Quaderform mit rechteckigem Querschnitt. Anstelle eines Förderbandes 6 können auch andere Elemente zum Fördern des Objekts 7 vorgesehen sein, wie beispielsweise angetriebene Förderrollen bzw. Förderwalzen. Alternativ kann auch der optische Sensor 1 und die Lichtquelle 2 dynamisch und die Objekte 7 statisch angeordnet sein.

Der optische Sensor 1 ist vertikal über dem Förderband 6 angeordnet, und zwar in etwa mittig zum Förderband 6. Seitlich versetzt zum optischen Sensor 1 ist die Lichtquelle 3 angeordnet. Grundsätzlich kann jedoch die Lichtquelle 3 auch etwa mittig über dem Förderband 6 angeordnet sein und der optische Sensor 1 seitlich versetzt dazu.

Die Lichtquelle 3 projiziert in einem Projektionsbereich 8 das Lichtmuster 4 auf das Förderband 6 und das Objekt 7, wobei das Lichtmuster 4 streifenförmiger in Richtung der ersten Erstreckungsachse X ausgebildet ist. Der Projektionsbereich 8 ist durch gestrichelte Linien angedeutet. Das Objekt 7 wird durch den Projektionsbereich 8 und durch den Sichtbereich 2 hindurch gefördert.

In dem Bereich, in dem das Objekt 7 durch den Projektionsbereich 8 hindurch gefördert wird, sind der Projektionsbereich 8 und der Sichtbereich 2 koplanar bzw. überschneidend zueinander angeordnet. Dies bedeutet, dass der optische Sensor 1 stets in dem Bereich, in dem das Objekt 7 durch den Projektionsbereich 8 hindurch gefördert wird, das auf das Objekt 7 projizierte Lichtmuster 4 erfassen kann. Hierbei ist der Sichtbereich 2 in Transportrichtung T genauso oder weiter aufgefächert als der Projektionsbereich 6. Somit befindet sich das Lichtmuster 4 stets im Sichtbereich 2 des optischen Sensors 1.

Sofern der optische Sensor 1 als Matrixkamera ausgebildet ist und das Lichtmuster 4 in Transportrichtung schmaler ist als der Sichtbereich 2, kann rein rechnerbasiert eine Fehljustierung, also eine winklige Anordnung des Lichtmusters 4 relativ zum Sichtbereich 2 des optischen Sensors 1, ausgeglichen werden.

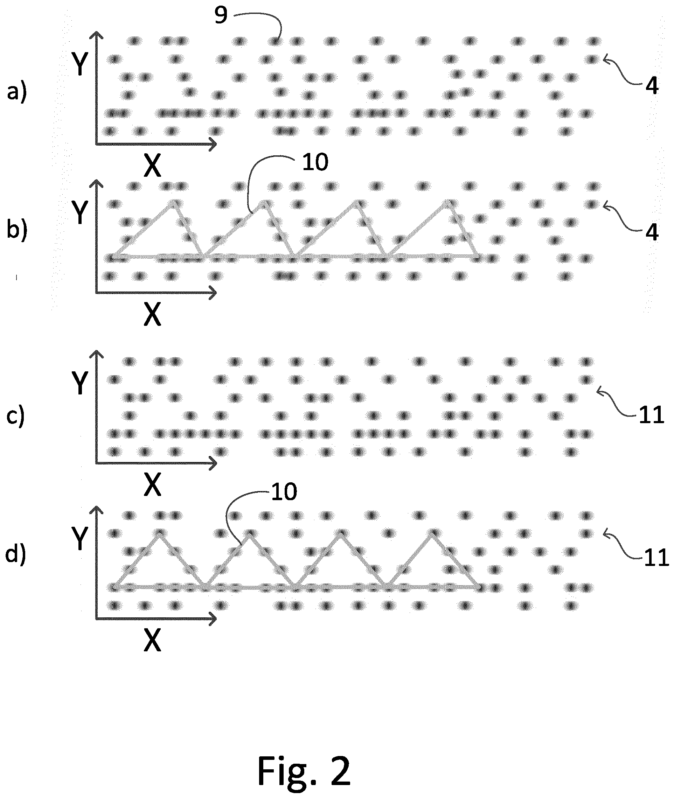

Figur 2a zeigt ein Abbild des Lichtmusters 4, das einzelne Lichtmusterelemente in Form von Lichtpunkten 9 umfasst. Eine Verarbeitungsanlage bzw. Auswerteeinheit, im Allgemeinen ein Computer, bestimmt, ob eine Verzerrung des vom optischen Sensor 1 erfassten Lichtmusters 4 vorliegt. Hierfür werden die einzelnen Positionen der Lichtpunkte 9 anhand der Bildkoordinaten innerhalb der ersten Erstreckungsachse X und einer zweiten Erstreckungsachse Y möglichst parallel zur Transportrichtung T aus dem Lichtmuster 4 detektiert. Eine Teilanzahl von Lichtpunkten 9 dient als Stützstellen und definiert jeweils ein geometrisches Muster 10, wie dies in Figur 2b dargestellt ist. Im vorliegenden Beispiel ist das geometrische Muster 10 ein Dreieck. Zu erkennen ist, dass mehrere identische geometrische Muster 10 in Richtung der ersten Erstreckungsachse X nebeneinander angeordnet sind.

Die Verzerrung wird bestimmt, indem die Punktkoordinaten der Eckpunkte der geometrischen Muster 10 innerhalb der 2D-Bildkoordinaten der ersten Erstreckungsachse X und der zweiten Erstreckungsachse Y extrahiert werden und die Abstände der Lichtpunkte 9 in Richtung der ersten Erstreckungsachse X und der zweiten Erstreckungsachse Y bestimmt werden. Im vorliegenden Fall werden die Abstände zwischen drei Lichtpunkten 9, die auf Eckpunkten des dreieckigen geometrischen Musters 10 liegen, bestimmt.

Die Verhältnisse der Abstände zwischen den Lichtpunkten 9 wird an die bekannten Verhältnisse der Abstände zwischen den Lichtpunkten 9 eines Referenzlichtmusters 11 angeglichen. Das Referenzlichtmuster 11 ist in Figur 2c dargestellt, wobei in Figur 2d dasselbe Referenzlichtmuster 11 dargestellt ist und zusätzlich die nicht verzerrten geometrischen Muster 10 erkennbar sind. Das Referenzlichtmuster 11 ist dasjenige Lichtmuster, das sich ergibt, wenn das Lichtmuster 4 auf eine Referenzebene 5, die senkrecht zur Blickrichtung bzw. senkrecht zur Sensorachse des optischen Sensors 1 angeordnet ist, im vorliegenden Fall auf die Oberfläche des Förderbands 6, projiziert wird.

Sollten einige der Lichtpunkte 9 zu stark verzerrt sein oder sollten Lichtpunkte 9 an Stützstellen fehlen, müssen die Lichtpunkte 9 an mindestens zwei Stützstellen pro geometrischem Muster 10 erfasst worden sein und weitere Lichtpunkte 9 in der direkten Umgebung des geometrischen Musters 10 bekannt sein, um die fehlenden Lichtpunkte 9 bzw. Stützstellen interpolieren zu können.

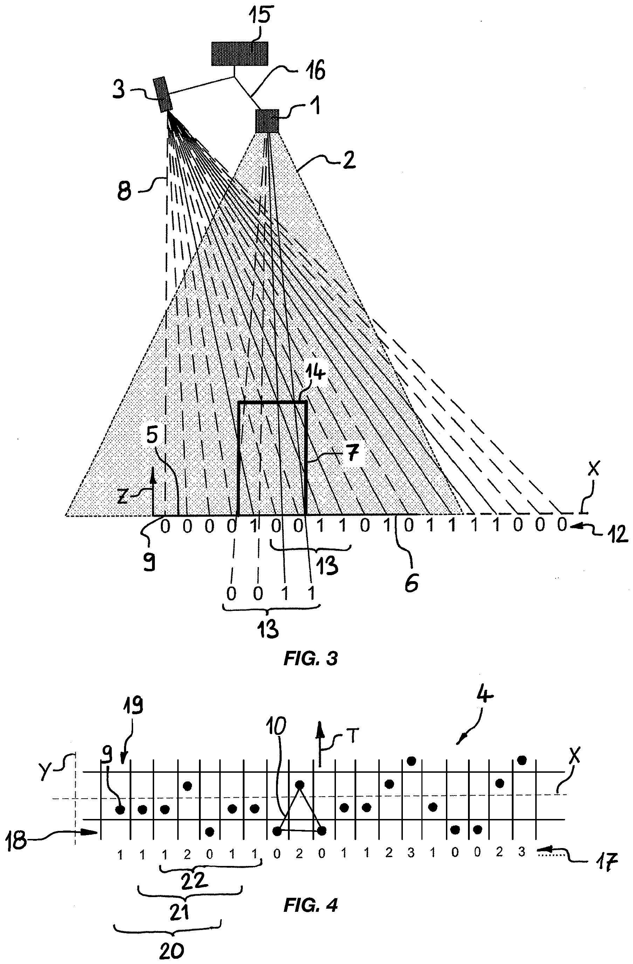

Figur 3 zeigt ein weiteres Ausführungsbeispiel einer Vorrichtung zum Messen der Höhe und des Höhenverlaufs eines Objekts. Bauteile, die von ihrer Funktion her mit Bauteilen des Ausführungsbeispiels gemäß Figur 1 übereinstimmen, sind mit den gleichen Bezugszeichen versehen, auch wenn sich die Anordnung eventuell von der Anordnung gemäß Figur 1 unterscheidet.

Schematisch ist zudem dargestellt, dass das projizierte Lichtmuster 4 auf dem Förderband 6 durch Lichtmusterelemente in Form von Lichtpunkten 9 aufgebaut ist, wobei die Lichtpunkte 9 im Beispiel gemäß Figur 3 binär codiert sind. Jeder Lichtpunkt 9 ergibt somit eine binäre Zahl 0 oder 1. Zusammen bilden alle Lichtpunkte 9 ein Gesamtcodewort 12 über die Breite des Förderbands 6 bzw. in Richtung der ersten Erstreckungsachse X. Das Gesamtcodewort 12 ist im vorliegenden Fall aus einzelnen Codewörtern mit jeweils vier Lichtpunkten 9, die eine Lichtmusterelementgruppe 13 bilden, dargestellt. Beispielhaft ist hier eine Lichtmusterelementgruppe 13 markiert, welches das Binärwort (Codewort) "0011" definiert. Das Codewort ist eindeutig und individuell innerhalb des Gesamtcodeworts 12 identifizierbar. Das Codewort existiert genau einmal innerhalb des Gesamtcodeworts 12. Dem Codewort der Lichtmusterelementgruppe 13 ist eine genaue Position entlang der ersten Erstreckungsachse X zugeordnet, wobei sich dies auf eine Referenzebene, welche durch die Oberfläche des Förderbands 6 dargestellt ist, bezieht. Wird somit das Codewort der Lichtmusterelementgruppe 13 erkannt, ist klar, an welcher Stelle sich dieses auf der Referenzebene befindet.

Wird nun das Paket 7 durch den Projektionsbereich 8 bewegt, werden einzelne Lichtpunkte 9 des Lichtmusters 4 von der Oberfläche 14 des Objekts 7 (Pakets) reflektiert und von dem optischen Sensor 1 aufgenommen. Da die Lichtquelle 3 seitlich versetzt zum optischen Sensor 1 angeordnet ist, verschiebt sich im vom optischen Sensor 1 aufgenommenen Abbild des Lichtmusters 4 im vorliegenden Fall die Lichtmusterelementgruppe 13 seitlich nach rechts entlang der ersten Erstreckungsachse X. Obwohl das Codewort der Lichtmusterelementgruppe 13 nur teilweise in vertikaler Überdeckung mit dem Paket 7 angeordnet ist, wird das vollständige Codewort der Lichtmusterelementgruppe 13 von der Oberfläche 14 des Pakets 7 reflektiert. Hierbei findet im vorliegenden Fall eine seitliche Verschiebung um ca. zwei der Lichtpunkte 9 statt. Durch ein herkömmliches Triangulationsverfahren lässt sich dann anhand der Größe der Verschiebung der Lichtmusterelementgruppe 13 die Höhe der Oberfläche 14 des Objekts 7 (Pakets) errechnen. Hierzu dient eine Verarbeitungsanlage 15, zum Beispiel in Form eines Computers, die über Datenleitungen 16 mit dem optischen Sensor 1 und ggf. auch mit der Lichtquelle 3 verbunden ist.

Figur 4 zeigt einen Ausschnitt aus einem anderen Ausführungsbeispiel eines Lichtmusters 4, welches ein Gesamtcodewort 17 definiert. Das Lichtmuster 4 besteht aus einzelnen Lichtmusterelementen in Form von Lichtpunkten 9, die z.B. mittels eines Lasers und eines DOE (diffraktives optisches Element) gebildet sein können. Die einzelnen Lichtpunkte 9 sind in Richtung zur ersten Erstreckungsachse X und damit quer zur Transportrichtung T nebeneinander angeordnet, und zwar in vier Zeilen 18. Die Zeilen 18 sind in Richtung der zweiten Erstreckungsachse Y, welche im gezeigten Ausführungsbeispiel parallel zur Transportrichtung T ausgerichtet ist, hintereinander angeordnet. Grundsätzlich ist es auch denkbar, dass die zweite Erstreckungsachse Y zwar quer zur ersten Erstreckungsachse X verläuft, jedoch nicht genau parallel zur Transportrichtung T ausgerichtet ist. Die Lichtpunkte 9 sind zudem in Richtung der ersten Erstreckungsachse X in nebeneinander angeordneten Spalten 19 angeordnet, wobei im gezeigten Ausführungsbeispiel in jeder Spalte 19 genau ein Lichtpunkt 9 positioniert ist. Die Position des jeweiligen Lichtpunkts 9 in Richtung der zweiten Erstreckungsachse Y stellt ein Codiermerkmal dar, über welches jeder einzelne Lichtpunkt 9 codiert ist. Es ist jedoch auch möglich, dass in zumindest einigen der Spalte 19, oder auch in allen Spalten 19, mehr als nur ein Lichtpunkt 9 angeordnet ist. Somit würde auch die Anzahl der Lichtpunkte 9 in einer Spalte 19 ebenfalls ein Codiermerkmal darstellen.

So kann jedem Lichtpunkt 9 eine Zahl zugeordnet werden, wobei allen Lichtpunkten 9 in der in Figur 4 dargestellten untersten Reihe die Zahl 0, in der darüber befindlichen zweiten Reihe die Zahl 1, in der dritten Reihe die Zahl 2 und in der vierten Reihe die Zahl 3 zugeordnet wird. Somit ergibt sich das in Figur 4 unter dem Lichtmuster 4 dargestellte Gesamtcodewort 17. Das Gesamtcodewort 17 bildet mit jeweils fünf beliebigen nebeneinander angeordneten Lichtpunkten 9 Lichtmusterelementgruppen. Das Codewort der äußerst linken ersten Lichtmusterelementgruppe 20 weist die Codierung "11120" auf. Ein Lichtpunkte 9 weiter rechts befindet sich eine zweite Lichtmusterelementgruppe 21 mit dem Codewort "11201". Eine weitere darauf folgende dritte Lichtmusterelementgruppe 22 weist das Codewort "12011" auf.

Hierbei überlappen sich alle genannten Lichtmusterelementgruppen 20, 21, 22, umfassen also teilweise dieselben Lichtpunkte 9. Die erste Lichtmusterelementgruppen 20 hat somit vier gemeinsame Lichtpunkte 9 mit der zweiten Lichtmusterelementgruppe 21. Vorteilhaft wirkt sich hierbei aus, dass zur Identifizierung eines Codeworts lediglich fünf Lichtpunkte 9 ermittelt werden müssen, um eine eindeutige Zuordnung dieses Codeworts innerhalb des Gesamtcodeworts 17 vornehmen zu können.

### Bezugszeichenliste

- 1: optischer Sensor
- 2: Sichtbereich
- 3: Lichtquelle
- 4: Lichtmuster
- 5: Referenzebene
- 6: Förderband
- 7: Objekt
- 8: Projektionsbereich
- 9: Lichtpunkt
- 10: geometrisches Muster
- 11: Referenzlichtmuster
- 12: Gesamtcodewort
- 13: Lichtmusterelementgruppe
- 14: Oberfläche
- 15: Verarbeitungsanlage
- 16: Datenleitung
- 17: Gesamtcodewort
- 18: Zeile
- 19: Spalte
- 20: erste Lichtmusterelementgruppe
- 21: zweite Lichtmusterelementgruppe
- 22: dritte Lichtmusterelementgruppe

- X: erste Erstreckungsachse
- Y: zweite Erstreckungsachse

## Patentansprüche

1. Verfahren zum Erkennen einer Verzerrung eines ein Codewort definierenden Lichtmusters (4), wobei das Verfahren die folgenden Verfahrensschritte umfasst:
Projizieren eines Lichtmusters (4) mittels einer Lichtquelle (3), wobei das auf eine Referenzebene (5) bezogene Lichtmuster ein Referenzlichtmuster (11) darstellt,
wobei das Referenzlichtmuster (11) einzelne, beabstandet zueinander angeordnete Lichtmusterelemente (9) aufweist, die in Richtung einer ersten Erstreckungsachse (X) in mehreren aufeinanderfolgenden Spalten (19) angeordnet sind,
wobei die Spalten (19) sich jeweils in Richtung einer zweiten Erstreckungsachse (Y) quer zur ersten Erstreckungsachse (X) erstrecken und jeweils mindestens eines der Lichtmusterelemente (9) beinhalten,
wobei die Anzahl und/oder die Position des mindestens einen Lichtmusterelements (9) in jeder Spalte (19) des Referenzlichtmusters (11) ein Codiermerkmal ist und eine Abfolge von Lichtmusterelementen (9) in einer vorbestimmten Anzahl aufeinanderfolgender Spalten (19) ein Codewort definieren, und
Erfassen des Lichtmusters (4) mittels eines optischen Sensors (1),
**dadurch gekennzeichnet,**
**dass** zumindest eine Teilanzahl der Lichtmusterelemente (9) des Referenzlichtmusters (11) eine Mehrzahl von in Richtung der ersten Erstreckungsachse (X) aufeinanderfolgend angeordneten geometrischen Mustern (10) definieren,
**dass** die geometrischen Muster (10) im erfassten Lichtmuster (4) detektiert werden und
**dass** eine Verzerrung des erfassten Lichtmusters (4) gegenüber dem Referenzlichtmuster (11) durch einen Vergleich der geometrischen Muster (10) des erfassten Lichtmusters (4) mit den geometrischen Mustern (10) des Referenzlichtmusters (11) ermittelt wird.

2. Verfahren nach Anspruch 1,
**dadurch gekennzeichnet,**
**dass** zur Ermittlung einer Verzerrung die Abstände der die geometrischen Muster (10) definierenden Lichtmusterelemente (9) des erfassten Lichtmusters (4) zueinander mit den Abständen im Referenzlichtmuster (11) verglichen werden.

3. Verfahren nach Anspruch 1 oder 2,
**dadurch gekennzeichnet,**
**dass** bei einer Verzerrung ein Abbild des erfassten Lichtmusters (4) entzerrt wird, indem das Abbild des erfassten Lichtmusters (4) derart umgewandelt wird, dass die geometrischen Muster (10) im erfassten Lichtmuster (4) den geometrischen Mustern (10) im Referenzlichtmuster (11) zumindest angenähert ist.

4. Verfahren nach Anspruch 2,
**dadurch gekennzeichnet,**
**dass** bei einer Verzerrung ein Abbild des erfassten Lichtmusters (4) entzerrt wird, indem die Abstände der die geometrischen Muster (10) definierenden Lichtmusterelemente (9) im erfassten Lichtmuster (4) zueinander an die Abstände im Referenzlichtmuster (11) zumindest annähernd angeglichen werden.

5. Verfahren nach Anspruch 3 oder 4,
**dadurch gekennzeichnet,**
**dass** in dem entzerrten erfassten Lichtmuster (4) das Codewort dekodiert wird.

6. Verfahren nach einem der Ansprüche 1 bis 5,
**dadurch gekennzeichnet,**
**dass** die geometrischen Muster (10) jeweils durch zumindest drei der Lichtmusterelemente (9) definiert werden.

7. Verfahren nach einem der Ansprüche 1 bis 6,
**dadurch gekennzeichnet,**
**dass** die geometrischen Muster (10) jeweils ein Dreieck sind und die Ecken des Dreiecks durch jeweils eines der Lichtmusterelemente (9) definiert werden.

8. Verfahren nach einem der Ansprüche 1 bis 7,
**dadurch gekennzeichnet,**
**dass** eine Mehrzahl von Lichtmustern in Richtung einer von der ersten Erstreckungsachse (X) abweichenden Richtung, insbesondere in Richtung der zweiten Erstreckungsachse (Y), aufeinanderfolgend angeordnet ist.

9. Verfahren nach einem der Ansprüche 1 bis 8,
**dadurch gekennzeichnet,**
**dass** das Lichtmuster mehrere Abfolgen einer vorbestimmten Anzahl von Lichtmusterelementen (9) in aufeinanderfolgenden Spalten (19) aufweist, die jeweils ein Codewort definieren, wobei die Lichtmusterelemente (9) aller aufeinanderfolgender Spalten (19) gemeinsam ein Gesamtcodewort definieren.

10. Verfahren nach einem der Ansprüche 1 bis 9,
**dadurch gekennzeichnet,**
**dass** die Codewörter jeweils individuell genau einmal innerhalb eines Gesamtcodeworts (12, 17), das durch alle Lichtmusterelemente (9) des Lichtmusters (4) definiert wird, existieren.

11. Verfahren nach Anspruch 10,
**dadurch gekennzeichnet,**
**dass** das Codewort einer bestimmten Referenzposition in Richtung der ersten Erstreckungsachse (X) des Referenzlichtmusters (11) innerhalb des Lichtmusters zugeordnet ist.

12. Verfahren nach einem der Ansprüche 1 bis 11,
**dadurch gekennzeichnet,**
**dass** die Lichtmusterelemente Lichtpunkte (9) sind.

13. Lichtmuster zur Verwendung bei einem Verfahren zum Erkennen einer Verzerrung eines ein Codewort definierenden Lichtmusters (4),
wobei das Lichtmuster (4) einzelne, beabstandet zueinander angeordnete Lichtmusterelemente (9) aufweist, die in Richtung einer ersten Erstreckungsachse (X) in mehreren aufeinanderfolgenden Spalten (19) angeordnet sind,
wobei die Spalten (19) sich jeweils in Richtung einer zweiten Erstreckungsachse (Y) quer zur ersten Erstreckungsachse (X) erstrecken und jeweils mindestens eines der Lichtmusterelemente (9) beinhalten,
wobei die Anzahl und/oder Position des mindestens einen Lichtmusterelements (9) in jeder Spalte (19) des Lichtmusters (4) ein Codiermerkmal ist und eine Abfolge von Lichtmusterelementen (9) in einer vorbestimmten Anzahl aufeinanderfolgender Spalten (19) ein Codewort definieren,
**dadurch gekennzeichnet,**
**dass** das auf eine Referenzebene (5) bezogene Lichtmuster ein Referenzlichtmuster (11) darstellt, und dass zumindest eine Teilanzahl der Lichtmusterelemente (9) des Referenzlichtmusters (11) eine Mehrzahl von in Richtung der ersten Erstreckungsachse (X) aufeinanderfolgend angeordneten geometrischen Mustern (10) definieren.

## Claims

1. A method of detecting a distortion of a light pattern (4) defining a code word, the method comprising the steps of:
projecting a light pattern (4) by means of a light source (3), wherein the light pattern referred to a reference plane (5) represents a reference light pattern (11),
wherein the reference light pattern (11) comprises individual light pattern elements (9) arranged at a distance from each other and arranged in a plurality of successive columns (19) in the direction of a first extension axis (X),
wherein the columns (19) each extend in the direction of a second extension axis (Y) transverse to the first extension axis (X) and each include at least one of the light pattern elements (9),
wherein the number and/or position of the at least one light pattern element (9) in each column (19) of the reference light pattern (11) is an encoding feature and a sequence of light pattern elements (9) in a predetermined number of successive columns (19) define a code word, and
Detection of the light pattern (4) by means of an optical sensor (1),
**characterized in**
**that** at least a partial number of the light pattern elements (9) of the reference light pattern (11) define at least one predetermined geometric pattern (10),
**that** the at least one geometric pattern (10) is detected in the detected light pattern (4), and
**that** a distortion of the detected light pattern (4) with respect to the reference light pattern (11) is determined by comparing the at least one geometric pattern (10) of the detected light pattern (4) with the at least one geometric pattern (10) of the reference light pattern (11).

2. The method according to claim 1,
**characterized in**
**that**, in order to determine a distortion, the distances between the light pattern elements (9) of the detected light pattern (4) which define the geometric patterns (10) are compared with the distances in the reference light pattern (11).

3. The method according to claim 1 or 2,
**characterized in**
**that**, in the event of distortion, an image of the detected light pattern (4) is rectified by converting the image of the detected light pattern (4) in such a way that the geometric patterns (10) in the detected light pattern (4) are at least approximated to the geometric pattern (10) in the reference light pattern (11).

4. The method according to claim 2,
**characterized in**
**that**, in the event of distortion, an image of the detected light pattern (4) is rectified in that the distances between the light pattern elements (9) defining the geometric patterns (10) in the detected light pattern (4) are at least approximately matched to the distances in the reference light pattern (11).

5. The Method according to claim 3 or 4,
**characterized in**
**that** the code word is decoded in the rectified detected light pattern (4).

6. The method according to one of claims 1 to 5,
**characterized in**
**that** the geometric patterns (10) are defined by at least three of the light pattern elements (9).

7. The method according to one of claims 1 to 6,
**characterized in**
**that** the geometric patterns (10) are each a triangle and the respective corners of the triangles are each defined by one of the light pattern elements (9).

8. The method according to one of claims 1 to 7,
**characterized in**
**that** a plurality of light patterns are arranged successively in the direction of a direction deviating from the first extension axis (X), in particular in the direction of the second extension axis (Y).

9. The method according to one of claims 1 to 8,
**characterized in**
**that** the light pattern comprises a plurality of sequences of a predetermined number of light pattern elements (9) in successive columns (19) each defining a code word, the light pattern elements (9) of all successive columns (19) together defining an overall code word.

10. The method according to one of claims 1 to 9,
**characterized in**
**that** the code words each exist individually exactly once within an overall code word (12, 17) defined by all the light pattern elements (9) of the light pattern (4).

11. The method according to claim 10,
**characterized in**
**that** the code word is assigned to a specific reference position in the direction of the first extension axis (X) of the reference light pattern (11) within the light pattern.

12. The method according to one of claims 1 to 11,
**characterized in**
**that** the light pattern elements are light spots (9).

13. A light pattern for use in a method of detecting a distortion of a light pattern defining a code word (4),
wherein the light pattern (4) comprises individual light pattern elements (9) arranged at a distance from each other and arranged in a plurality of successive columns (19) in the direction of a first extension axis (X),
wherein the columns (19) each extend in the direction of a second extension axis (Y) transverse to the first extension axis (X) and each include at least one of the light pattern elements (9),
wherein the number and/or position of the at least one light pattern element (9) in each column (19) of the light pattern (4) is an encoding feature and a sequence of light pattern elements (9) in a predetermined number of successive columns (19) define a code word,
**characterized in**
**that** the light pattern (4) referred to a reference plane (5) represents a reference light pattern (11), and that at least a partial number of the light pattern elements (9) of the reference light pattern (11) define at least one predetermined geometric pattern (10), and that a plurality of identical geometric patterns (10) are arranged next to one another in the direction of the first extension axis (X).

## Revendications

1. Procédé, destiné à déceler une distorsion d'un motif lumineux (4) définissant un mot de code, le procédé comprenant les étapes de procédé suivantes, consistant à :
projeter un motif lumineux (4) au moyen d'une source lumineuse (3), le motif lumineux rapporté à un plan de référence (5) représentant un motif lumineux (11) de référence,
le motif lumineux (11) de référence comportant des éléments (9) de motif lumineux individuels, placés avec un écart mutuel, qui en direction d'un premier axe (X) d'extension, sont placés en plusieurs colonnes (19) consécutives,
les colonnes (19) s'étendant chacune dans la direction d'un deuxième axe (Y) d'extension, à la transversale du premier axe (X) d'extension et comprenant chacune au moins l'un des éléments (9) de motif lumineux,
le nombre et / ou la position de l'au moins un élément (9) de motif lumineux dans chaque colonne (19) du motif lumineux (11) de référence étant une caractéristique de codage et une séquence d'éléments (9) de motif lumineux dans un nombre prédéfini de colonnes (19) consécutives définissant un mot de code et capter un motif lumineux (4) au moyen d'un capteur optique (1),
**caractérisé**
**en ce qu'**au moins un nombre partiel des éléments (9) de motif lumineux du motif lumineux (11) de référence définit une pluralité de motifs (10) géométriques placés consécutivement dans la direction du premier axe (X) d'extension,
**en ce que** les motifs (10) géométriques placés sont détectés dans le motif lumineux (4) capté et
**en ce qu'**une distorsion du motif lumineux (4) capté en rapport au motif lumineux (11) de référence est déterminée par une comparaison des motifs (10) géométriques du motif lumineux (4) capté avec le motif (10) géométrique du motif lumineux (11) de référence.

2. Procédé selon la revendication 1,
**caractérisé**
**en ce que** pour déterminer une distorsion, les écarts mutuels entre les éléments (9) de motif lumineux du motif lumineux (4) capté définissant les motifs (10) géométriques sont comparés avec les écarts dans le motif lumineux (11) de référence.

3. Procédé selon la revendication 1 ou 2,
**caractérisé**
**en ce que** lors d'une distorsion, une image du motif lumineux (4) capté est égalisée en ce que l'image du motif lumineux (4) capté est transformée de telle sorte que les motifs (10) géométriques dans le motif lumineux (4) captés sont au moins rapprochés des motifs (10) géométriques dans le motif lumineux (11) de référence.

4. Procédé selon la revendication 2,
**caractérisé**
**en ce que** lors d'une distorsion, une image du motif lumineux (4) capté est égalisée en ce que les écarts mutuels entre les éléments (9) de motif lumineux définissant les motifs (10) géométriques dans le motif lumineux (4) capté sont adaptés au moins approximativement aux écarts dans le motif lumineux (11) de référence.

5. Procédé selon la revendication 3 ou 4,
**caractérisé**
**en ce que** le mot de code est décodé dans le motif lumineux (4) capté égalisé.

6. Procédé selon l'une quelconque des revendications 1 à 5,
**caractérisé**
**en ce que** les motifs géométriques (10) sont définis chacun par au moins trois éléments (9) de motif géométrique.

7. Procédé selon l'une quelconque des revendications 1 à 6,
**caractérisé**
**en ce que** les motifs géométriques (10) sont chacun un triangle et en ce que les angles du triangle sont définis chacun par l'un des éléments (9) de motif lumineux.

8. Procédé selon l'une quelconque des revendications 1 à 7,
**caractérisé**
**en ce qu'**une pluralité de motifs lumineux est placée consécutivement dans la direction d'une direction différente du premier axe (X) d'extension, notamment dans la direction du deuxième axe (Y) d'extension.

9. Procédé selon l'une quelconque des revendications 1 à 8,
**caractérisé**
**en ce que** le motif lumineux comporte plusieurs séquences d'un nombre prédéfini d'éléments (9) de motif lumineux dans des colonnes (19) consécutives, dont chacun définit un mot de code, les éléments (9) de motif lumineux de toutes les colonnes (19) consécutives définissant conjointement un mot de code global.

10. Procédé selon l'une quelconque des revendications 1 à 9,
**caractérisé**
**en ce que** les mots de code existent chacun individuellement, précisément une fois à l'intérieur du mot de code global (12, 17) qui est défini par tous les éléments (9) de motif lumineux du motif lumineux (4).

11. Procédé selon la revendication 10,
**caractérisé**
**en ce que** le mot de code est affecté à une position de référence déterminée dans la direction du premier axe (X) d'extension du motif lumineux (11) de référence à l'intérieur du motif lumineux.

12. Procédé selon l'une quelconque des revendications 1 à 11,
**caractérisé**
**en ce que** les éléments de motif lumineux sont des points lumineux (9).

13. Motif lumineux, prévu pour être utilisé dans un procédé destiné à déceler une distorsion d'un motif lumineux (4) définissant un mot de code,
le motif lumineux (4) comportant des éléments (9) de motif lumineux séparés, placés avec un écart mutuel, qui dans la direction d'un premier axe (X) d'extension sont placés en plusieurs colonnes (19) consécutives,
les colonnes (19) s'étendant chacune dans la direction d'un deuxième axe (Y) d'extension, à la transversale du premier axe (X) d'extension et comprenant chacune au moins l'un des éléments (9) de motif lumineux,
le nombre et / ou la position de l'au moins un élément (9) de motif lumineux dans chaque colonne (19) du motif lumineux (4) étant une caractéristique de codage et une séquence d'éléments (9) de motif lumineux dans un nombre prédéfini de colonnes (19) consécutives définissant un mot de code,
**caractérisé**
**en ce que** le motif lumineux rapporté à un plan de référence (5) représente un motif lumineux (11) de référence et en ce qu'au moins un nombre partiel des éléments (9) de motif lumineux du motif lumineux (11) de référence définit une pluralité de motifs (10) géométriques placés consécutivement dans la direction du premier axe (X) d'extension.
